# EUROPEAN PATENT SPECIFICATION

(11) **EP 4 194 240 B1**
(45) Date of publication and mention of the grant of the patent: **08.10.2025**
(21) Application number: 21855464.0
(22) Date of filing: 09.08.2021
(51) Int. Cl.: B60K 1/04, B60L 50/60, B60L 53/80

(54) **LOCKING MECHANISM, BATTERY BRACKET, ELECTRIC VEHICLE, AND METHOD FOR LOCKING AND UNLOCKING BATTERY PACK**
VERRIEGELUNGSMECHANISMUS, BATTERIEHALTERUNG, ELEKTROFAHRZEUG UND VERFAHREN ZUM VERRIEGELN UND ENTRIEGELN EINES BATTERIEPACKS
MÉCANISME DE VERROUILLAGE, SUPPORT DE BATTERIE, VÉHICULE ÉLECTRIQUE ET PROCÉDÉ DE VERROUILLAGE ET DE DÉVERROUILLAGE DE BATTERIE

(30) Priority: 10.08.2020 CN 202010794648
(43) Date of publication of application: 14.06.2023
(73) Proprietor: Aulton New Energy Automotive Technology Group, Guangzhou, Guangdong 510700 (CN); Shanghai Dianba New Energy Technology Co., Ltd., Shanghai 201308 (CN)
(72) Inventor: ZHANG, Jianping, Shanghai 201308 (CN); HUANG, Chunhua, Shanghai 201308 (CN)
(74) Representative: Hannke Bittner & Partner mbB Regensburg
(86) International application number: PCT/CN2021/111418
(87) International publication number: WO 2022/033411

(56) References cited:
- EP-A1- 1 717 883
- EP-A1- 4 159 509
- WO-A1-2019/129289
- CN-A- 109 986 991
- CN-A- 109 986 991
- CN-U- 206 186 768
- CN-U- 209 566 780
- CN-U- 209 566 780

## Description

The present application claims the priority of Chinese patent application 2020107946486 filed on August 10, 2020.

### TECHNICAL FIELD

The present invention relates to a locking mechanism, a battery bracket, an electric vehicle, and a method for locking and unlocking a battery pack.

### BACKGROUND

The existing methods of mounting battery packs for electric vehicles are generally mounting a fixed type battery pack and a replaceable type battery pack, wherein the fixed type battery pack is generally fixed on a vehicle, and the vehicle is directly used as a charging object during charging. In addition, the replaceable battery pack is generally fixed to a bracket of a vehicle by means of a movable mounting, the battery pack can be removed for separate replacement or charging operation, and mounted on the vehicle after the replaced battery pack has been charged.

In the prior art, the method for replacing a battery pack comprises manual and automatic methods, etc., no matter which method is used, when a battery is mounted on a bracket of a vehicle, the bracket needs to lock the battery on the bracket, due to the large volume and heavy weight of the battery, a multi-point locking method is usually used to achieve the method. Regarding a locking mechanism, how to quickly and conveniently lock or unlock the battery on the bracket of the vehicle is a core of research by a person skilled in the art.

Document D1 (CN109986991A) discloses a locking device used for a battery pack, a lock assembly, a quick-changing support assembly and an electric car. The locking device comprises a lock base, a spring bolt and arestoration part, wherein the lock base is provided with an opening and a cavity, and the opening is used for a locking shaft to enter the cavity; the spring bolt can rotate relative to the lock baseand change between an unlocking state and a locking state; the spring bolt comprises a spring bolt body and a spring bolt expansion part which is located outside the lock base, and when the spring bolt is in the locking state, the spring bolt body can stop the locking shaft from leaving from the cavity from the opening; the restoration part is arranged on the lock base and used for acting on the spring bolt, the restoration part can elastically deform, so that the spring bolt rotates in a locking direction to be restored to the locking state from the unlocking state. The locking device has theadvantage that unlocking is facilitated. The locking mechanism can provide a secondary locking or locking protection function for the battery pack, when locking of an existing device is failed, the locking device is used for preventing the battery pack from falling off, and the safety performance is improved.

Document D2 (EP4159509A1) discloses a locking mechanism (100) for use in a battery pack, comprising: a lock base (110), the lock base (110) being provided with an opening and a cavity (112) extending from the opening (111), the opening (111) being used for allowing a lock shaft (200) mounted on the battery pack to enter the cavity (112); a lock tongue (120), the lock tongue (120) being rotatable relative to the lock base (110) so as to shift between an unlocked state and a locked state, and when the lock tongue (120) is in the locked state, the lock tongue (120) can stop the lock shaft (200) from leaving the cavity (112) via the opening (111); and a resetting part (130), the resetting part (130) being provided on the lock base (110) and acting on the lock tongue (120), the resetting part (130) being capable of producing a flexible distension and used for allowing the lock tongue (120) to rotate in a locking direction so as to reset from the unlocked state to the locked state, thus facilitating the mounting and locking of the battery pack, improving the reliability of locking, and increasing safety. Also disclosed are a lock assembly comprising the locking mechanism, a quick-swap support frame assembly, and an electric vehicle.

Document D3 (CN209566780U) discloses a locking mechanism, a locking assembly, a quick-change support assembly and an electric automobile. The locking mechanism comprises a lock base provided with an opening and a cavity extending from the opening, and the opening is used for allowing a lock shaft installed on the battery pack to enter the cavity; the spring bolt can rotate relative to the lock base so as to change between an unlocking state and a locking state; the side, used for facing the lock shaft, of the spring bolt is sequentially provided with a first locking part and a second locking part in the locking direction, the first locking part is used for limiting the lock shaft from falling from the locking base, and when the spring bolt is in the locking state, the second locking part is used for limiting the lock shaft to move towards the first locking part so as to prevent the lock shaft from leaving the cavity from the opening. The first locking part is used for roughly limiting the lockshaft, the second locking part is used for finely limiting the lock shaft, the lock shaft can be reliably locked through cooperation of the first locking part and the second locking part, the lockingstability is remarkably improved, and then the battery replacement reliability of the electric automobile is improved.

### CONTENT OF THE PRESENT INVENTION

The invention is as defined by the subject-matter of the independent claims. Potential further aspects of the invention are defined by the subject-matter of the dependent claims.

The technical problem to be solved in the present invention is for overcoming the defect of the weak connection between the battery pack and the battery bracket in the prior art, and providing a locking mechanism, a battery bracket, an electric vehicle, and a method for locking and unlocking a battery pack.

The present invention solves the above-mentioned technical problem through the following technical solutions:
a locking mechanism according to the independent claim 1.

In the present case, the lock shaft can be placed in the accommodating cavity, and when the lock shaft is in the locked state, the lock shaft is locked in the accommodating cavity by the lock tongue, so that the battery pack is fixed with the lock base. When the lock tongue rotates upward, the lock shaft is converted into an unlocked state and can be removed from the accommodating cavity, thereby effectively reducing the complication and complexity of the process for mounting and dismounting the battery pack. In addition, in the locked state, even if the electric vehicle is violently shaken during driving to cause the lock shaft to move relative to the lock base, thereby causing the lock shaft to exert an acting force on the lock tongue, since a shaft center of the rotary shaft of the lock tongue is higher than the shaft center of the lock shaft, the acting force will cause a downward rotation tendency of the lock tongue, i.e. a rotation tendency in the locking direction, thereby improving the locking stability of the lock shaft in the lock base, preventing the lock shaft from converting to the unlocked state due to the upward rotation of the lock tongue, and even in a turbulence state, the locking mechanism is not easy to automatically unlock, improving the reliability of battery pack fixing.

Preferably, one end of the accommodating cavity is a locking position of the lock shaft, and the other end is a connection position of a rotary shaft of the lock tongue, and the lock tongue comprises a fixed end rotatably connected to the rotary shaft, a contact end extending toward the locking position of the lock shaft and adapted to abut the lock shaft, and a rotation end extending toward the outside of the lock base and adapted to rotate about the rotary shaft under an external force.

In this case, the fixed end of the lock tongue is rotatably connected to one end of the accommodating cavity, and the contact end of the lock tongue can then bear the lock shaft against the other end of the accommodating cavity, so that the lock shaft is restrained in the locking position. An external force may be applied to the rotation end to rotate the lock tongue about the rotational shaft center to convert the lock shaft between the locked state and the unlocked state.

Preferably, when the lock shaft is in the locked state, the lock shaft exerts a first acting force on the lock tongue, and the rotary shaft exerts a second acting force on the lock tongue, and the first acting force is opposite to the second acting force.

In this case, the first acting force and the second acting force which are opposite to each other are jointly applied to the lock tongue, so that the lock tongue is fixed, reducing the possibility of rotation of the lock tongue due to turbulence of the vehicle, preventing the locking mechanism from being undesirably automatically unlocked, and ensuring the reliability of fixing the lock shaft.

The rotation end abuts downwardly against the top of the lock base when the lock shaft is in the locked state.

In this case, when the lock shaft is moved toward the outside of the accommodating cavity in the locked state, the lock tongue can be made to have a downward rotation tendency, and since the rotation end downward abuts against the top of the lock base, the lock tongue does not rotate but remains stationary, the lock shaft cannot escape from the accommodating cavity, and the battery pack can be firmly connected to the vehicle frame.

The lock shaft generates a first acting force on the lock tongue, the first acting force forms a first moment with respect to the rotary shaft, and the lock base generates a third acting force on the rotation end, the third acting force forms a second moment with respect to the rotary shaft, and the first moment is opposite to the second moment.

In this case, the first moment causes the lock tongue to tend to rotate downwards, so that even if the lock shaft moves in the direction of the lock tongue, the lock tongue does not move upwards due to the acting force of the lock shaft to make the lock shaft convert from the locked state to the unlocked state. At the same time, the second moment enables the lock tongue not to rotate downwards excessively, ensuring the stability of the lock tongue when the lock shaft is in a locked state, and preventing the lock tongue from rotating downwards due to the action of the lock shaft. Therefore, in the locked state, the more the lock shaft moves toward the lock tongue, the higher the locking stability of the lock tongue with respect to the lock shaft, and the less likely the lock tongue will rotate and the lock shaft will be in the unlocked state. Thus, the interaction of the first moment and the second moment improves the locking stability of the lock tongue to the lock shaft.

Preferably, the lock tongue comprises a contact end that abuts against the lock shaft when the lock shaft is in the locked state, and the position on the lock shaft that contacts the contact end includes an outer wall of the lock shaft below the shaft center of the lock shaft.

In this case, the contact end is at least in contact with the outer wall of the lock shaft in a lowered position, which enables the direction of the first acting force to be directed below the shaft center of the rotary shaft, so that the first moment tends to drive the lock tongue to move downwards instead of upwards. Moreover, the contact end of such configuration prevents the lock shaft from sliding out of the accommodating cavity below the lock tongue.

Preferably, the lock tongue includes a contact end, and the contact between the contact end and the outer circumferential surface of the lock shaft is a surface contact.

In this case, the contact end has a cambered surface that is fitted to the outer circumferential surface of the lock shaft and partially coated on the lock shaft so that the contact end is firmly fitted to the lock shaft to improve the stability and reliability of the locked state.

Preferably, the contact end is provided with a tangent angle extending towards the shaft center of the lock shaft, and the tangent angle contacts an outer wall of the lock shaft below the shaft center of the lock shaft when the lock shaft is in the locked state.

In this case, the tangent angle contacts the lower surface of the lock shaft to prevent the lock shaft from coming out of contact with the accommodating cavity below the lock tongue. Further, the lock shaft can exert a first acting force on the lock tongue at least partly through a tangent angle, so that the direction of the first acting force can be directed below the rotary shaft, which enables a first moment generated by the first acting force to drive the lock tongue downwards without rotating the lock tongue upwards, resulting in unlocking of the locking mechanism.

Preferably, the shaft center line of the lock shaft and the shaft center line of the rotary shaft are provided to be located on the same reference plane, and an angle exists between the movement direction of the lock shaft in the accommodating cavity and the reference plane.

In this case, in a common case (such as the lock tongue being in surface contact with the lock shaft), the movement direction of the lock shaft in the accommodating cavity is consistent or basically consistent with the direction of the first acting force, and since there is an included angle between the movement direction of the lock shaft and the reference plane, it is possible to avoid the first acting force being directed to the shaft center of the rotary shaft, otherwise the first acting force cannot generate the first moment.

Preferably, the locking mechanism comprises an elastic member that acts on the lock shaft such that the lock shaft in the locked state is press-fixed to the locked position in the accommodating cavity by the elastic member and the lock tongue.

In this case, the lock shaft is fixed in the locking position under the combined action of the lock tongue and the elastic member to ensure a stable connection of the battery pack. The elastic member and the lock tongue may be located on different sides of the lock shaft, and the elastic member allows the lock shaft to abut the lock tongue, i.e., the first acting force is provided by the elastic member. When unlocking is required, the lock shaft can be driven to move in the direction of the elastic member, and then the lock tongue is rotated so that the lock shaft is converted to the unlocked state. The elastic member may be provided within the accommodating cavity.

Preferably, the locking mechanism comprises at least two sets of the lock bases and lock tongues.

In this case, by providing a plurality of sets of lock bases and lock tongues, the support strength of the locking mechanism for the battery pack and the locking safety are improved.

Preferably, the locking mechanism comprises a connecting rod to which a rotation end of each of the lock tongues is connected to achieve simultaneous locking and unlocking of a plurality of the lock tongues.

In this case, using an external force to drive the connecting rod or any lock tongue, all the lock tongues can be driven to rotate synchronously to realize the synchronous locking and unlocking of multiple lock tongues, and therefore the control of locking and unlocking is relatively convenient, which is beneficial to the rapid locking and unlocking of the battery pack.

Preferably, the lock base has an opening for the lock shaft to enter the accommodating cavity, and the opening has a guide portion.

In this case, the lock shaft can enter and exit the accommodating cavity through the opening, and the guide portion of the opening enables the lock shaft to enter the accommodating cavity smoothly, thereby reducing the positioning requirements for the lock shaft when the lock shaft enters the accommodating cavity.

Preferably, the opening is provided downward, and the guide portion constitutes a flared mouth that flares downward.

In this case, when the lock shaft needs to enter and exit the accommodating cavity, the lock tongue rotates upwards, and since the opening of the accommodating cavity faces downwards, the lock shaft does not interfere with the lock tongue when entering and exiting the opening. The guiding structure of the flared mouth is simple and easy to implement.

Preferably, the lock tongue comprises a fixedly connected lock tongue body and a lock tongue extension located outside the lock base, and the lock tongue body is able to prevent the lock shaft from leaving the cavity from the opening when the lock tongue is in the locked state;

the locking mechanism further comprises a return member provided to the lock base and acting on the lock tongue, and the return member is elastically deformable for rotating the lock tongue in a locking direction to return from the unlocked state to the locked state.

In this case, the return member is provided to facilitate the return of the lock tongue from the unlocked state to the locked state, so that the mounting and locking of the battery pack are both convenient, and when the lock tongue is in the locked state, under the action of the return member, the lock tongue abuts against the lock shaft, and the lock tongue does not easily change to the unlocked state, so that the locking is more reliable; providing a lock tongue extension located outside the lock base, and rotating and unlocking the lock tongue body can be achieved by acting on the lock tongue extension; the locking mechanism may provide a secondary locking or locking protection function for the battery pack to prevent the battery pack from falling out when the existing device fails to lock, improving safety performance.

A battery bracket comprising a locking mechanism as described above.

In this case, the battery bracket can lock and unlock the battery pack conveniently and quickly to effectively reducing the complication and complexity of the process for mounting and dismounting the battery pack. Further, the battery bracket can stably lock the lock shaft in the locked state, and when an external force is applied to the lock shaft, the battery bracket has a certain anti-interference capability, and the locking mechanism does not automatically unlock to ensure the reliability of battery pack fixing.

An electric vehicle comprising the battery bracket as described above.

In this case, the electric vehicle can achieve the locking and unlocking of the battery pack in a relatively simple structure, and the electric vehicle has a high locking stability for the battery pack, and the battery pack cannot easily fall off from the electric vehicle under external interference.

A method for locking a battery pack using a locking mechanism as described above, which comprises the following steps of:
placing the lock shaft of the battery pack in the accommodating cavity; and
rotating the lock tongue so that the lock shaft is in the locked state.

In this case, the lock shaft is restrained in the accommodating cavity by merely placing the lock shaft in the accommodating cavity and then rotating the lock tongue, so that the battery pack is fixed to the electric vehicle, the locking of the battery pack can be conveniently achieved, and since the locking mechanism does not automatically unlock, the reliability of the fixing of the battery pack is ensured.

A method for unlocking a battery pack using a locking mechanism as described above, which comprises the following steps of:
rotating the lock tongue so that the lock shaft in the unlocked state; and
removing the lock shaft of the battery pack from the accommodating cavity.

In this case, the lock shaft can be removed from the accommodating cavity by merely rotating the lock tongue, so that the battery pack can be removed from the heavy-duty electric vehicle for a subsequent power exchange operation, and the replacement of the battery pack can be conveniently achieved.

The positive effect of the present invention is that
according to the locking mechanism, the battery bracket, the electric vehicle and the method for locking and unlocking the battery pack of the present invention, the lock shaft is placed in an accommodating cavity, when the lock shaft is in a locked state, the lock shaft is locked in the accommodating cavity by the lock tongue, so that the battery pack is fixed with the lock base, and the lock tongue rotates upwards, then the lock shaft is converted to an unlocked state and can be removed from the accommodating cavity, and the locking and unlocking operations only require rotating the lock tongue, which is very convenient, thereby effectively reducing the complication and complexity of the process for mounting and dismounting the battery pack. Further, in the locked state, as the shaft center of the rotary shaft of the lock tongue in the locked state is higher than the shaft center of the lock shaft, thus when the lock shaft moves in the accommodating cavity, the lock tongue may be driven to rotate downward, preventing the lock tongue from rotating upward and causing the lock shaft to convert into the unlocked state, and improving the reliability of fixing a battery pack.

### BRIEF DESCRIPTION OF THE DRAWINGS

Fig. 1 is a schematic view of a locking mechanism according to Embodiment 1 of the present invention.
Fig. 2 is a schematic diagram showing the connection relationship between the locking mechanism and the lock shaft according to Embodiment 1 of the present invention, when the lock shaft is in a locked state.
Fig. 3 is a schematic view showing the connection relationship between the locking mechanism and the lock shaft according to Embodiment 1 of the present invention, when the lock shaft moves in the direction of the elastic member and comes out of contact with the lock tongue.
Fig. 4 is a schematic diagram showing a connection relationship between a locking mechanism and a lock shaft according to Embodiment 1 of the present invention, when the lock shaft is in an unlocked state.
Figs. 5a to 5c are acting force analysis diagrams of the locking mechanism according to Embodiment 1 of the present invention.
Figs. 6a to 6c are schematic structural views (II) of a locking mechanism according to Embodiment 1 of the present invention.
Fig. 7 is a schematic flow chart of a method for locking a battery pack according to Embodiment 1 of the present invention.
Fig. 8 is a flow chart showing a method for unlocking a battery pack according to Embodiment 1 of the present invention.
Fig. 9 is a schematic cross-sectional view of a lock base according to Embodiment 2 of the present invention.
Fig. 10 is a schematic perspective view of a lock tongue according to Embodiment 2 of the present invention.
Figs. 11a to 11e show a lock shaft mounting process according to Embodiment 2 of the present invention.

Description of Reference Numerals
lock base 1; accommodating cavity 11; opening 12; guide portion 121; first limiting surface 13; lock tongue 2; fixed end 21; contact end 22; tangent angle 221; rotation end 23; pressing surface 231; lock tongue body 24; lock tongue extension 25; second limiting surface 251; lock shaft 3; rotary shaft 4; elastic member 5; connecting rod 6; return member 7; locking mechanism 100; first acting force F1; second acting force F2; third acting force F3; height difference d

### DETAILED DESCRIPTION OF THE PREFERRED EMBODIMENT

The invention is further illustrated by the following examples, which are not intended to limit the invention thereto.

In the description of the present invention, it is to be understood that the terms "upper", "lower", "front", "rear", "left", "right", "vertical", "horizontal", "top", "bottom", "inner", "outer", "clockwise", "counterclockwise", and the like indicate orientations or positional relationships based on those shown in the drawings, are merely for convenience in describing the present invention and to simplify the description, and do not indicate or imply that the referenced devices or elements must have a particular orientation, be constructed and operated in a particular orientation, and thus are not to be construed as limiting the present invention.

### Embodiment 1

An embodiment of the present invention provides an electric vehicle having a battery bracket for mounting a battery pack, on which a locking mechanism 100 capable of locking and unlocking the battery pack mounted on the battery bracket is provided.

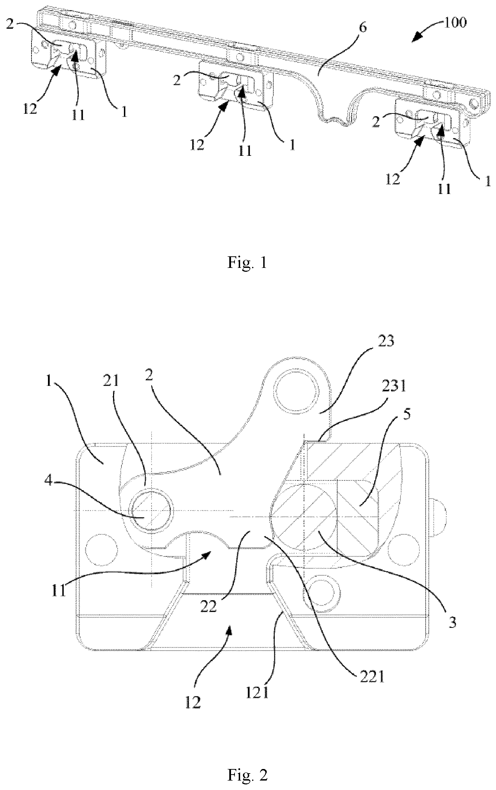

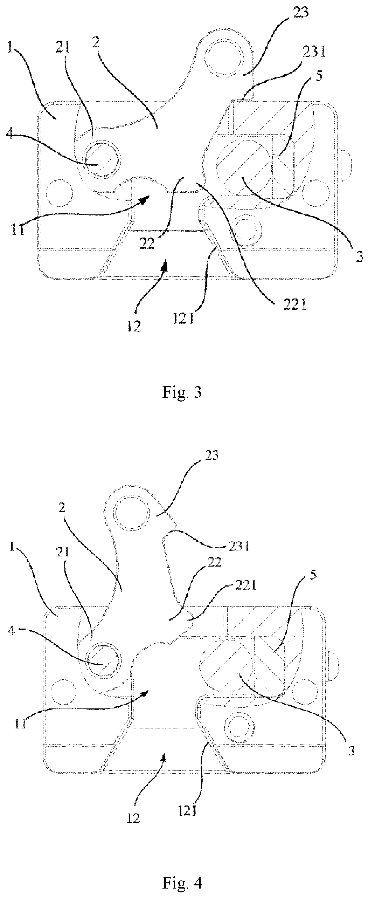

As shown in Figs. 1-4, the locking mechanism 100 comprises a lock base 1 and a lock tongue 2, wherein the lock tongue 2 is rotatably mounted to the lock base 1 about a rotary shaft 4, the lock base 1 has an accommodating cavity 11 for locking and fixing the lock shaft of the battery pack, the accommodating cavity 11 has an opening 12 through which the lock shaft 3 of the battery pack can enter and exit the accommodating cavity 11, and the lock shaft 3 located in the accommodating cavity 11 can be in a locked state or an unlocked state by rotating the lock tongue 2. Specifically, referring to Figs. 2 to 4, when the lock tongue 2 rotates downward to the position shown in Fig. 2, the lock shaft 3 located in the accommodating cavity 11 is in a locked state, and when the lock tongue 2 rotates upward to the position shown in Fig. 4, the lock shaft 3 is converted to an unlocked state and can be removed from the accommodating cavity 11, so that the locking mechanism 100 can be easily converted between the locked state and the unlocked state, thereby effectively reducing the complication and complexity of the process for mounting and dismounting the battery pack.

As shown in Fig. 2, when the lock shaft 3 is in the locked state, the lock shaft 3 is locked in the accommodating cavity 11 by the lock tongue 2 so that the battery pack is mounted on the battery bracket. At the same time, the shaft center of the rotary shaft 4 of the lock tongue 2 is higher than the shaft center of the lock shaft 3; when the lock shaft 3 moves towards the opening 12 of the accommodating cavity 11 under the action of an external force, the lock shaft 3 can drive the lock tongue 2 to have a downward rotation tendency, preventing the lock shaft 3 from moving to the opening 12, so that the lock shaft 3 is in a stable locked state in the accommodating cavity 11, preventing the lock shaft 3 from converting to an unlocked state due to the upward rotation of the lock tongue 2; and even in a state where the electric vehicle runs in a rough state, the locking mechanism 100 will not automatically unlock due to its own movement, improving the reliability of battery pack fixing.

One end of the accommodating cavity 11 is a locking position of the lock shaft 3, and the other end is a connection position of the rotary shaft 4 of the lock tongue 2. The lock tongue 2 includes a fixed end 21 rotatably connected to the rotary shaft 4, a contact end 22 extending from the fixed end 21 toward the locking position of the lock shaft 3, and adapted to abut the lock shaft 3 to restrict the movement of the lock shaft 3, and a rotation end 23 extending from the fixed end 21 toward the outside of the locking base 1 above the accommodating cavity 11, and adapted to rotate about the rotary shaft 4 under external force. The fixed end 21 of the lock tongue 2 is rotatably connected to one end of the accommodating cavity 11, the rotary shaft 4 is mounted in the lock base, and the contact end 22 of the lock tongue 2 can abut the lock shaft 3 against the other end of the accommodating cavity 11, so that the lock shaft 3 is restrained in the locking position. An external force may be applied to the rotation end 23 to rotate the lock tongue 2 about the rotational shaft center 4 to convert the lock shaft 3 between the locked state and the unlocked state. The rotation end 23 of the lock tongue 2 has a pressing surface 231 which can be fitted to the top wall of the lock base 1 when the lock shaft 3 is in the locked state.

When the lock shaft 3 is in the locked state, the rotation end 23 abuts downward against the top wall of the lock base 1. When the lock shaft 3 in the locked state moves relative to the lock base toward the opening 12 of the accommodating cavity 11 during the running of the electric vehicle due to the sway of the vehicle, the lock shaft 3 exerts an acting force on the lock tongue, and since the shaft center of the rotary shaft 4 of the lock tongue 2 is higher than the shaft center of the lock shaft 3, the acting force can cause the lock tongue 2 to have a downward rotation tendency, and at the same time, since the rotation end 23 abuts downward against the top of the lock base 1 and prevents the lock tongue 2 from rotating downward, the lock tongue 2 does not rotate, but is maintained in a stable locked state, the lock shaft 3 cannot come out of contact with the accommodating cavity 11, and the battery pack can be securely attached to the vehicle frame. In the vehicle turbulence state, the lock tongue itself is easy to rotate about the rotary shaft, and the acting force exerted on the lock tongue by the lock shaft prevents the lock shaft from converting to the unlocked state due to the rotation of the lock tongue itself.

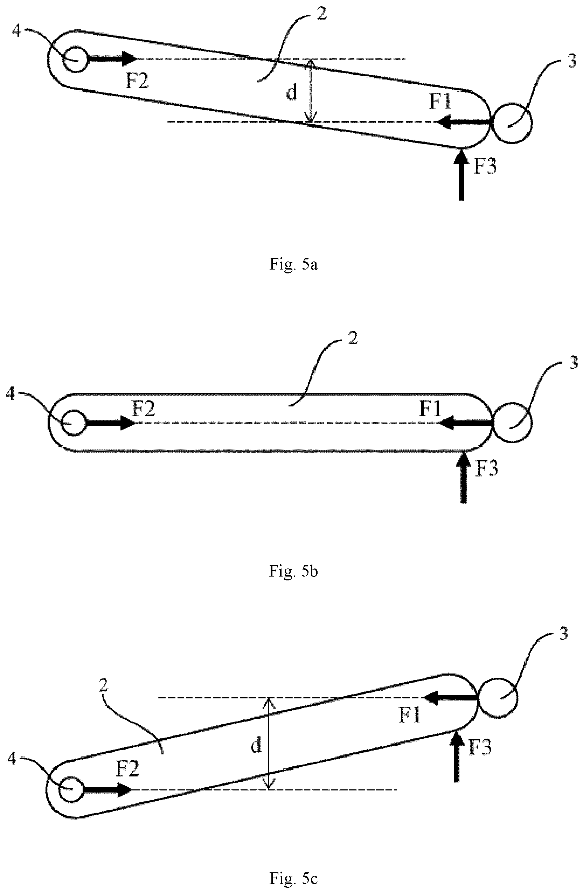

Further, as shown in Fig. 5a, since the shaft center line of the rotary shaft 4 in this embodiment is higher than the shaft center line of the lock shaft 3, there is a height difference d therebetween, and when the lock shaft 3 is in the locked state, the lock shaft 3 applies a first acting force F1 to the lock tongue 2, the rotary shaft 4 applies a second acting force F2 to the lock tongue 2, and the first acting force F1 and the second acting force F2 are opposite in direction. A first acting force F1 and a second acting force F2 which are opposite are applied together to the lock tongue 2, so that the lock tongue 2 is maintained in a stable locked state, and therefore the lock tongue 2 is not easily rotated even if the vehicle is in turbulence, thereby preventing an undesired automatic unlocking of the locking mechanism 100 and ensuring the reliability of fixing the lock shaft 3.

At the same time, the first acting force F1 forms a first moment with respect to the rotary shaft 4, and the lock base (not shown in the figure) generates a third acting force F3 to the rotary end of the lock tongue 2, and the third acting force F3 forms a second moment with respect to the rotary shaft 4, and the first moment is opposite to the second moment.

The first moment causes the lock tongue 2 to tend to rotate downwards, so that even if the lock shaft 3 moves towards the outside of the accommodating cavity, the lock tongue 2 does not move upwards, causing the lock shaft 3 to convert from the locked state to the unlocked state. At the same time, the second moment is such that the lock tongue 2 does not rotate too far downwards, which would cause the lock shaft 3 to come out of contact with the accommodating cavity. Therefore, in the locked state, the more the lock shaft 3 moves toward the outside of the accommodating cavity, the less easily the lock shaft 3 moves away from the accommodating cavity.

In contrast, as shown in Fig. 5b, if the shaft center line of the rotary shaft 4 is made to be flush with the shaft center line of the lock shaft 3, although the first acting force F1 and the second acting force F2 can also be generated in the opposite direction, since the first acting force F1 does not generate a first moment, the third acting force F3 must be zero; otherwise, the second moment generated by the third acting force F3 will make the lock tongue 2 unable to be balanced, that is to say, the lock tongue will not abut against the lock base, which will reduce the stability of the lock tongue in the locked state.

As another comparison, as shown in Fig. 5c, if the shaft center line of the rotary shaft 4 is made lower than the shaft center line of the lock shaft 3, the first acting force F1 and the third acting force F3 are in the same direction with respect to the moment generated by the rotation seat 4 and cannot be balanced, so that the lock tongue cannot be smoothly locked.

It can be seen from the above-mentioned acting force analysis that since the shaft center line of the rotary shaft 4 in this embodiment is higher than the shaft center line of the lock shaft 3, when in a locked state, the lock tongue 2 remains stable under the combined action of multiple acting forces and multiple moments, reducing the possibility of automatic unlocking due to the automatic turnover of the lock tongue 2, the locking mechanism 100 has a considerable resistance to external interference, and the battery pack can be relatively reliably locked on the battery bracket of the electric vehicle.

The contact end 22 of the lock tongue 2 is in contact with the lock shaft 3 when the lock shaft 3 is in a locked state, and the position of the lock shaft 3 in contact with the contact end 22 comprises an outer wall of the lock shaft 3 below the shaft center of the lock shaft 3. That is to say, the contact end 22 has a stop structure protruding downward, and the stop structure of the contact end 22 at least contacts the position where the outer wall of the lock shaft 3 is located downward, which enables the direction of the first acting force to be directed below the shaft center of the rotary shaft 4, and ensures that the first moment can drive the lock tongue 2 to move downwards instead of upwards. Further, the above-mentioned downwardly protruding limiting structure can prevent the lock shaft 3 from sliding out of the accommodating cavity 11 below the lock tongue 2, ensuring that the lock shaft 3 is securely locked in the accommodating cavity 11.

The contact between the contact end 22 and the outer circumferential surface of the lock shaft 3 is a surface contact. In this embodiment, the contact end 22 has a cambered surface that fits to the outer circumferential surface of the lock shaft 3 and is partially coated on the lock shaft 3, so that the contact end 22 firmly fits to the lock shaft 3, improving the stability and reliability of the locked state.

The contact end 22 is provided with a tangent angle 221 protruding toward the shaft center of the lock shaft 3, and when the lock shaft 3 is in a locked state, the tangent angle 221 contacts an outer wall of the lock shaft 3 below the shaft center of the lock shaft 3. The tangent angle 221 contacts the lower surface of the lock shaft 3 and prevents the lock shaft 3 from coming out of contact with the accommodating cavity 11 below the lock tongue 2. Further, the lock shaft 3 can exert a first acting force on the lock tongue 2 at least partly through the tangent angle 221, so that the direction of the first acting force can be directed below the shaft center of the rotary shaft 4, which enables a first moment generated by the first acting force to drive the lock tongue 2 downwards without rotating the lock tongue 2 upwards, resulting in unlocking of the locking mechanism 100.

The shaft center line of the lock shaft 3 and the shaft center line of the rotary shaft 4 are provided to be located in the same reference plane, and there is an included angle between the movement direction of the lock shaft 3 in the accommodating cavity 11 and the reference plane. In a common case (e.g. the lock tongue 2 is in surface contact with the lock shaft 3), the direction of movement of the lock shaft 3 in the accommodating cavity 11 is consistent or basically consistent with the direction of the first acting force, and since there is an angle between the direction of movement of the lock shaft 3 and the reference plane, it is possible to avoid that the first acting force is directed to the shaft center of the rotary shaft 4, otherwise the first acting force cannot generate the first moment.

The locking mechanism 100 further comprises an elastic member 5 that acts on the lock shaft 3 such that the lock shaft 3 in the locked state is press-fixed in the locked position in the accommodating cavity 11 by the elastic member 5 and the lock tongue 2.

The lock shaft 3 is fixed in the locking position under the combined action of the lock tongue 2 and the elastic member 5 to ensure a stable connection of the battery pack. The elastic member 5 and the lock tongue 2 may be located on different sides of the lock shaft 3, the elastic member 5 allows the lock shaft 3 to abut against the lock tongue 2, i.e., the first acting force is provided by the elastic member 5. When unlocking is required, the lock shaft 3 can be first driven to move in the direction of the elastic member 5 so that the lock shaft 3 comes out of contact with the lock tongue 2, the contact end 22 of the lock tongue 2 is not blocked by the lock shaft 3 when rotating upwards, and then the lock tongue 2 rotates upward so that the lock shaft 3 is converted to the unlocked state. In this embodiment, the elastic member 5 may be provided in the accommodating cavity 11, and one end of the elastic member 5 is connected to the lock base and the other end thereof abuts the lock shaft. In certain other preferred embodiments, the elastic member 5 may also be provided outside the accommodating cavity 11. The elastic member 5 is preferably a silica gel pad or a rubber pad, and may be an elastic member or the like.

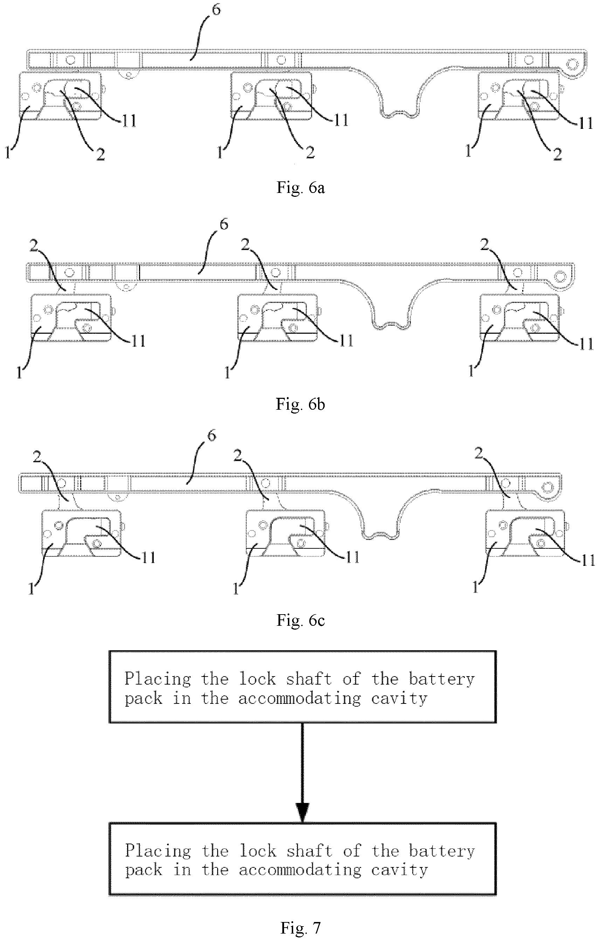

As shown in Figs. 6a to 6c, the locking mechanism 100 includes at least two sets of the lock bases 1 and the lock tongues 2. By providing a plurality of sets of the lock bases 1 and the lock tongues 2, the locking mechanism 100 has a strong fixing ability to the battery pack.

The locking mechanism 100 comprises a connecting rod 6, and a rotary end 23 of each lock tongue 2 is connected to the connecting rod 6, and when the connecting rod 6 is driven to move, or a certain lock tongue 2 is driven to move, a plurality of lock tongues 2 can rotate synchronously, thereby achieving synchronous locking and unlocking of a plurality of lock shafts 3 by the plurality of lock tongues 2. In this embodiment, the rotation end 23 is pivotally connected (e.g. by a pin) to the connecting rod 6.

By using an external force to drive the connecting rod 6 or any lock tongue 2, all the lock tongues 2 can be driven to rotate synchronously, and a plurality of lock tongues 2 can be synchronously converted from a locked state (Fig 6a) to an unlocked state (Fig 6c) via an intermediate state (Fig 6b), and vice versa to realize the synchronous locking and unlocking of a plurality of lock shafts 3, and therefore the control of locking and unlocking is relatively convenient, facilitating the rapid locking and unlocking of the battery pack.

The opening 12 of the lock base 1 has a guide portion 121, in particular, the opening 12 is provided downward, and the guide portion 121 constitutes a flared mouth that opens downward. The lock shaft 3 can enter and exit the accommodating cavity 11 through the opening 12, and the guide portion 121 of the opening 12 enables the lock shaft 3 to enter the accommodating cavity 11 smoothly, thereby reducing the positioning requirements for the lock shaft 3 when the lock shaft 3 enters the accommodating cavity 11. When the lock shaft 3 needs to enter and exit the accommodating cavity 11, the lock tongue 2 rotates upwards, and since the opening 12 of the accommodating cavity 11 faces downwards, the lock shaft 3 does not interfere with the lock tongue 2 when entering and exiting the opening 12. The guiding structure of the flared mouth is simple and easy to implement.

As shown in Fig. 7, this embodiment also provides a method for locking a battery pack using the above-described locking mechanism 100, which comprises the following steps of:
placing the lock shaft 3 of the battery pack in the accommodating cavity 11; and
rotating the lock tongue 2 so that the lock shaft 3 is in a locked state.

With this locking method, it is only necessary to place the lock shaft 3 into the accommodating cavity 11, and then rotate the lock tongue 2, so that the lock shaft 3 is restrained in the accommodating cavity 11, so that the battery pack is fixed to the electric vehicle, and the locking of the battery pack can be conveniently achieved, and since the locking mechanism 100 does not automatically unlock, the reliability of the battery pack fixing is ensured.

The locking method specifically comprises: the lock shaft 3 of the battery pack is moved upwards to enter the accommodating cavity 11 via the opening 12; the lock shaft 3 drives the lock tongue 2 to rotate upwards, and then opens the channel between the opening 12 and the accommodating cavity 11; after the lock shaft 3 moves upwards to a pre-set position, the lock shaft of the battery pack is moved in a horizontal direction away from the lock tongue 2 to a locking position; the lock tongue 2 falls down, and a channel between the opening 12 and the accommodating cavity 11 is closed; the lock shaft 3 is locked in the accommodating cavity 11; and the lock shaft 3 is pressed and fixed at the locking position by the lock tongue and the elastic member, so that the lock tongue 2 is in a locked state.

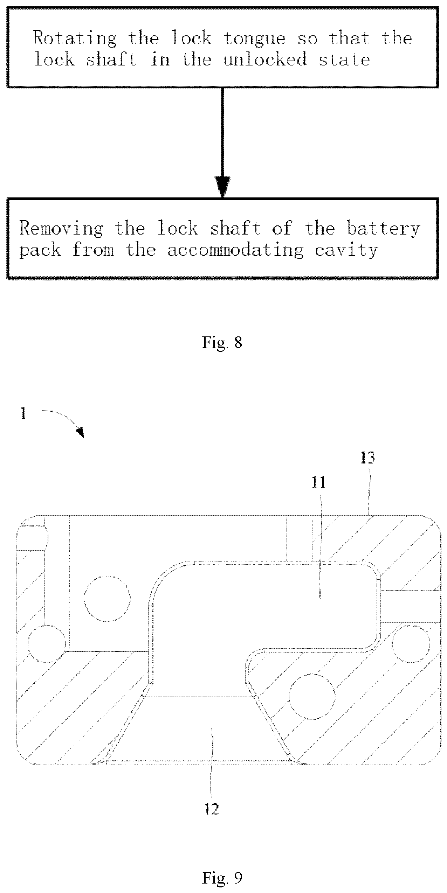

As shown in Fig. 8, this embodiment also provides a method for unlocking a battery pack using the locking mechanism 100 as described above, which comprises the following steps of:
rotating the lock tongue 2 so that the lock shaft 3 is in an unlocked state; and
removing the lock shaft 3 of the battery pack from the accommodating cavity 11.

With this unlocking method, the lock shaft 3 can be removed from the accommodating cavity 11 by merely rotating the lock tongue 2, so that the battery pack can be removed from the heavy the heavy-duty electric vehicle for a subsequent power exchange operation, and the replacement of the battery pack can be conveniently achieved.

The unlocking method specifically comprises: the battery pack lock shaft is moved away from the lock tongue 2 to an unlocking pre-tightening position, the lock tongue 2 rotates upwards, a channel between the opening 12 and the accommodating cavity 11 is opened, so that the lock shaft 3 is in an unlocked state, the battery pack lock shaft is moved towards the opening 12, and the lock shaft 3 is removed from the locking base 1.

### Embodiment 2

As shown in Fig. 9, Fig. 10, and Fig. 11a to Fig. 11e, this embodiment discloses another locking mechanism 100, which is similar to Embodiment 1 except for at least: the locking mechanism 100 further comprises a return member 7, the lock tongue 2 comprises a lock tongue body 24 and a lock tongue extension 25, the return member 7 is provided on the lock base 1 and acts on the lock tongue 2, the return member 7 can be elastically deformed, and the return member 7 is used for rotating the lock tongue 2 in a locking direction to return from an unlocked state to a locked state. Preferably, the return member 7 may be an elastic member, a torsion spring, a spring plate, or the like. The lock tongue extension 25 is located outside the lock base 1, and when the lock tongue 2 is in the locked state, the lock tongue body 24 can prevent the lock shaft 3 from leaving the accommodating cavity 11 from the opening 12. The lock tongue extension 25 located outside the lock base 1 is provided, and the lock tongue body 24 can be rotated by acting on the lock tongue extension 25 to facilitate unlocking. The return member 7 has a first spring portion 71 and a second spring portion 72. The first spring portion 71 is connected to the lock base 1, and the second spring portion 72 is connected to the lock tongue 2.

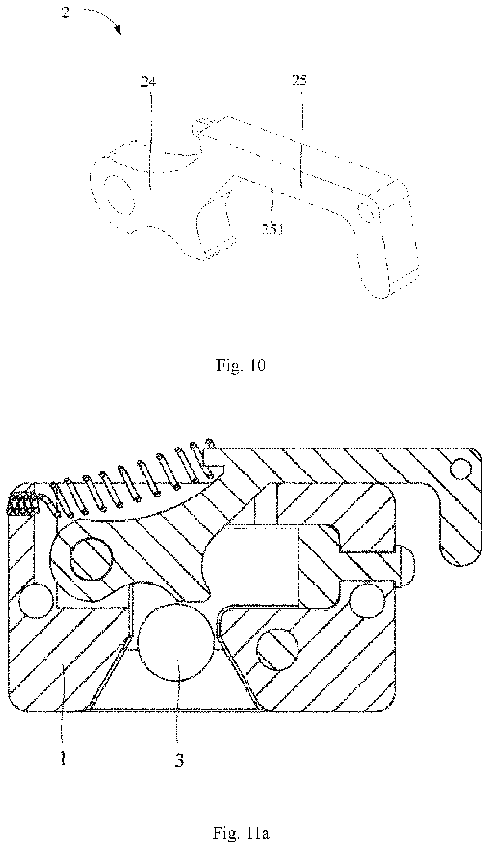

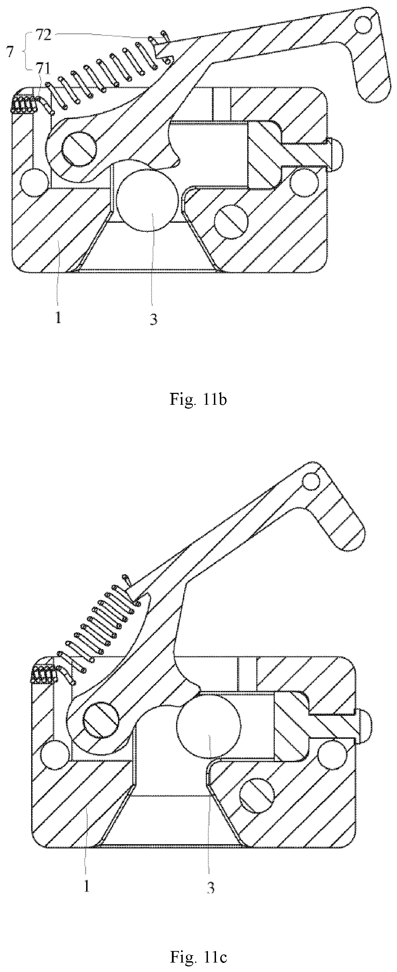

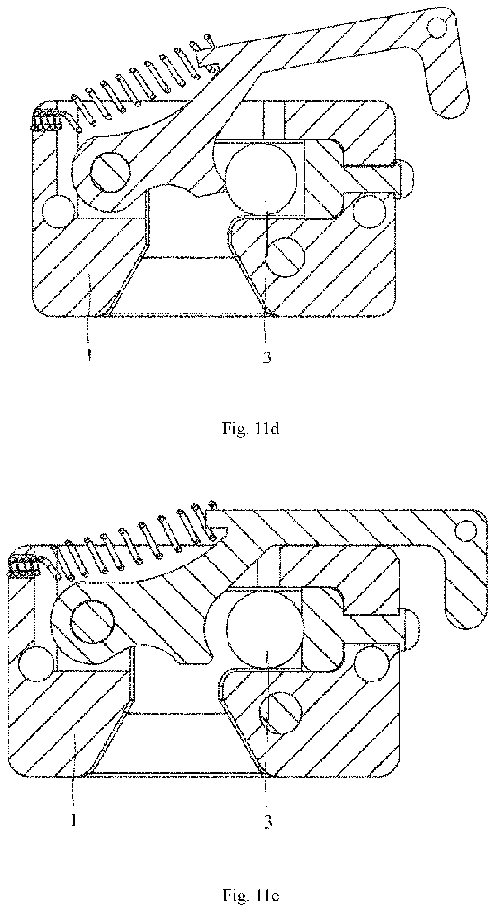

As shown in Fig. 9, the lock base 1 has a first limiting surface 13, and the first limiting surface 13 is an outer wall surface of the lock base 1. Specifically, it is an upper outer wall surface of the lock base 1. As shown in Fig. 6, the lock tongue extension 25 has a second limiting surface 251. The second limiting surface 251 is specifically a lower outer surface of the lock tongue 2. As shown in Fig. 11a or 11e, when the lock tongue 2 is in the locked state, the first limiting surface 13 abuts against the second limiting surface 251 to prevent the lock tongue 2 from continuing to rotate in the locking direction. In Figs. 11a-11e, the locking direction is clockwise. When the lock tongue 2 rotates in the locking direction until the first limiting surface 13 contacts the second limiting surface 251, the lock tongue 2 does not continue to rotate and stops in the locked state.

When the lock shaft 3 is in a locked state, the shaft center of the rotary shaft of the lock tongue 2 is higher than the shaft center of the lock shaft 3, and on the basis of the acting force analysis in embodiment 1, the return member 7 is added to apply a downward rotation moment to the lock tongue 2, so that the lock shaft 3 is in an unlocked state due to the lock tongue 2 turning over itself is avoided;

The locking process of the locking mechanism 100 of this embodiment is as follows (i.e. the mounting process of Figs. 11a to 11e, and the lock tongue 2 changing from the locked state to the unlocked state to the locked state): from Fig. 11a to Fig. 11c, the lock shaft 3 moves upwards under the action of an external force, enters the accommodating cavity 11 via the opening 12, and the lock shaft 3 acts on the lock tongue body 24 so that the lock tongue 2 rotates in a counterclockwise direction; the lock tongue 2 acts on the second spring portion 72 of the return member 7, so that the elastic acting force of the return member 7 changes; Figs. 11c to 11e, after the lock tongue 2 is rotated to a certain angle, a channel is formed in the accommodating cavity 11 for the lock shaft 3 to pass through, and the lock shaft 3 can move from left to right; until the lock shaft 3 is no longer in contact with the lock tongue body 24, the lock tongue 2 is rotated clockwise by the return member 7 to return to the locked state.

The unlocking process of the locking mechanism 100 of this embodiment is as follows: an acting force is applied upward to the lock tongue extension 25 so that the lock tongue 2 rotates in a counterclockwise direction; the lock tongue 2 acts on the second spring portion 72 of the return member 7, so that the elastic acting force of the return member 7 changes; after the lock tongue 2 is rotated to a certain angle, a channel through which the lock shaft 3 can pass is formed in the accommodating cavity 11; the lock shaft 3 is movable from right to left and then downwards through the opening 12 away from the locking mechanism 100.

While embodiments of the present invention have been described above, it will be understood by a person skilled in the art that this has been done by way of example only, and the scope of the invention is to be determined by the claims that follow. Various changes or modifications to these embodiments may be made by a person skilled in the art without departing from the scope of the invention, defined only by the subject-matter of the appended claims.

## Claims

1. A locking mechanism (100) comprising a lock base (1) and a lock tongue (2) rotatably mounted on the lock base (1) around a rotary shaft (4), the lock base (1) being provided with an accommodating cavity (11) for locking and fixing a lock shaft (3) of a battery pack, the lock tongue (2) being rotated so that the lock shaft (3) located within the accommodating cavity (11) is in a locked state and an unlocked state,
when the lock shaft (3) is in the locked state, a shaft center of the rotary shaft (4) of the lock tongue (2) is higher than a shaft center of the lock shaft (3);
the lock shaft (3) generates a first acting force (F1) on the lock tongue (2), the first acting force (F1) forms a first moment with respect to the rotary shaft (4), and the lock base (1) generates a third acting force (F3) on the lock tongue (2), the third acting force (F3) forms a second moment with respect to the rotary shaft (4), and the first moment is opposite to the second moment;
the lock tongue (2) comprises a contact end (22), the contact end (22) is provided with a tangent angle (221) extending towards the shaft center of the lock shaft (3), and the tangent angle (221) contacts an outer wall of the lock shaft (3) below the shaft center of the lock shaft (3) when the lock shaft (3) is in the locked state; **characterized in that**:
the lock tongue (2) comprises a fixed end (21) rotatably connected to the rotary shaft (4), the contact end (22) extending toward the locking position of the lock shaft (3) and adapted to abut the lock shaft (3), and a rotation end (23) extending toward the outside of the lock base (1) and adapted to rotate about the rotary shaft (4) under an external force;
the rotation end (23) abuts downwardly against the top of the lock base (1) when the lock shaft (3) is in the locked state.

2. The locking mechanism (100) according to claim 1, **characterized in that** one end of the accommodating cavity (11) is a locking position of the lock shaft (3), and the other end is a connection position of the rotary shaft (4) of the lock tongue (2),
when the lock shaft (3) is in the locked state, the lock shaft (3) exerts a first acting force (F1) on the lock tongue (2), and the rotary shaft (4) exerts a second acting force (F2) on the lock tongue (2), and the first acting force (F1) is opposite to the second acting force (F2).

3. The locking mechanism (100) according to at least one of claims 1 to 2, **characterized in that** the contact end (22) abuts against the lock shaft (3) when the lock shaft (3) is in the locked state, and a position on the lock shaft (3) that contacts the contact end (22) includes an outer wall of the lock shaft (3) below the shaft center of the lock shaft (3).

4. The locking mechanism (100) according to at least one of claims 1 to 3, **characterized in that** the contact between the contact end (22) and an outer circumferential surface of the lock shaft (3) is a surface contact.

5. The locking mechanism (100) according to at least one of claims 1 to 2, **characterized in that** a shaft center line of the lock shaft (3) and a shaft center line of the rotary shaft (4) are provided to be located on a same reference plane, and an angle exists between a movement direction of the lock shaft (3) in the accommodating cavity (11) and the reference plane.

6. The locking mechanism (100) according to at least one of claims 1 to 2, **characterized in that** the locking mechanism (100) comprises an elastic member (5) that acts on the lock shaft (3) such that the lock shaft (3) in the locked state is press-fixed to the locked position in the accommodating cavity (11) by the elastic member (5) and the lock tongue (2).

7. The locking mechanism (100) according to at least one of claims 1 to 6, **characterized in that** the locking mechanism (100) comprises at least two sets of the lock bases (1) and the lock tongues (2);
the locking mechanism (100) comprises a connecting rod (6) to which a rotation end (23) of each of the lock tongues (2) is connected to achieve simultaneous locking and unlocking of a plurality of the lock tongues (2).

8. The locking mechanism (100) according to at least one of claims 1 to 7, **characterized in that** the lock base (1) has an opening (12) for the lock shaft (3) to enter the accommodating cavity (11), and the opening (12) has a guide portion (121).

9. The locking mechanism (100) according to claim 8, **characterized in that** the opening (12) is provided downward, and the guide portion (121) constitutes a flared mouth that flares downward.

10. The locking mechanism (100) according to at least one of claims 1 to 9, **characterized in that** the lock tongue (2) comprises a fixedly connected lock tongue body (24) and a lock tongue extension (25), the lock tongue extension (25) located outside the lock base (1), and the lock tongue body (24) can prevent the lock shaft (3) from leaving the accommodating cavity (11) from the opening (12) of the accommodating cavity (11) when the lock tongue (2) is in the locked state;
the locking mechanism (100) further comprises a return member (7) provided to the lock base (1) and acting on the lock tongue (2), and the return member (7) is elastically deformable for rotating the lock tongue (2) in a locking direction to return from the unlocked state to the locked state.

11. A battery bracket, **characterized by** comprising the locking mechanism (100) according to any one of claims 1 to 10.

12. An electric vehicle, **characterized by** comprising the battery bracket according to claim 11.

13. A method for locking a battery pack, **characterized in that** the method for locking the battery pack uses the locking mechanism (100) according to at least one of claims 1 to 10, and the method for locking the battery pack comprises the following steps of:
placing the lock shaft (3) of the battery pack in the accommodating cavity (11); and
rotating the lock tongue (2) so that the lock shaft (3) is in the locked state.

14. A method for unlocking a battery pack, **characterized in that** the method for unlocking the battery pack uses the locking mechanism (100) according to at least one of claims 1 to 10, and the method for unlocking the battery pack comprises the following steps of:
rotating the lock tongue (2) so that the lock shaft (3) is in the unlocked state; and
removing the lock shaft (3) of the battery pack from the accommodating cavity (11).

## Patentansprüche

1. Ein Verriegelungsmechanismus (100), der eine Verriegelungsbasis (1) und eine Verriegelungszunge (2) umfasst, die um eine Drehachse (4) drehbar auf der Verriegelungsbasis (1) angebracht ist, wobei die Verriegelungsbasis (1) mit einem Aufnahmehohlraum (11) zum Verriegeln und Fixieren einer Verriegelungswelle (3) eines Akkupacks versehen ist, wobei die Verriegelungszunge (2) so gedreht wird, dass die innerhalb des Aufnahmehohlraums (11) befindliche Verriegelungswelle (3) in einem verriegelten Zustand und einem entriegelten Zustand ist, wobei
wenn sich die Verriegelungswelle (3) im verriegelten Zustand befindet, eine Wellenmitte der Drehachse (4) der Verriegelungszunge (2) höher liegt als eine Wellenmitte der Verriegelungswelle (3);
die Verriegelungswelle (3) eine erste Wirkkraft (F1) auf die Verriegelungszunge (2) erzeugt, wobei die erste Wirkkraft (F1) ein erstes Moment in Bezug auf die Drehachse (4) bildet, und die Verriegelungsbasis (1) eine dritte Wirkkraft (F3) auf die Verriegelungszunge (2) erzeugt, wobei die dritte Wirkkraft (F3) ein zweites Moment in Bezug auf die Drehachse (4) bildet und das erste Moment dem zweiten Moment entgegengesetzt ist; die Verriegelungszunge (2) ein Kontaktende (22) aufweist, wobei das Kontaktende (22) mit einem Tangentialwinkel (221) versehen ist, der sich zur Wellenmitte der Verriegelungswelle (3) erstreckt, und der Tangentialwinkel (221) eine Außenwand der Verriegelungswelle (3) unterhalb der Wellenmitte der Verriegelungswelle (3) kontaktiert, wenn sich die Verriegelungswelle (3) im verriegelten Zustand befindet, **dadurch gekennzeichnet, dass**
die Verriegelungszunge (2) ein feststehendes Ende (21) aufweist, das drehbar mit der Drehachse (4) verbunden ist, wobei sich das Kontaktende (22) in Richtung der Verriegelungsposition der Verriegelungswelle (3) erstreckt und so ausgebildet ist, dass es an der Verriegelungswelle (3) anliegt, und sich ein Rotationsende (23) in Richtung der Außenseite der Verriegelungsbasis (1) erstreckt und so ausgebildet ist, dass es sich unter einer äußeren Kraft um die Drehachse (4) dreht;
das Rotationsende (23) nach unten an der Oberseite der Verriegelungsbasis (1) anliegt, wenn sich die Verriegelungswelle (3) in dem verriegelten Zustand befindet.

2. Der Verriegelungsmechanismus (100) nach Anspruch 1, **dadurch gekennzeichnet, dass** ein Ende des Aufnahmehohlraums (11) eine Verriegelungsposition der Verriegelungswelle (3) ist und das andere Ende eine Verbindungsposition der Drehwelle (4) der Verriegelungszunge (2) ist, wenn sich die Verriegelungswelle (3) im verriegelten Zustand befindet, erzeugt die Verriegelungswelle (3) eine erste Wirkkraft (F1) auf die Verriegelungszunge (2) und die Drehwelle (4) erzeugt eine zweite Wirkkraft (F2) auf die Verriegelungszunge (2), wobei die erste Wirkkraft (F1) der zweiten Wirkkraft (F2) entgegengesetzt ist.

3. Der Verriegelungsmechanismus (100) nach wenigstens einem der Ansprüche 1 bis 2, **dadurch gekennzeichnet, dass** das Kontaktende (22) an der Verriegelungswelle (3) anliegt, wenn sich die Verriegelungswelle (3) im verriegelten Zustand befindet, und eine Position an der Verriegelungswelle (3), die das Kontaktende (22) berührt, eine Außenwand der Verriegelungswelle (3) unterhalb der Wellenmitte der Verriegelungswelle (3) umfasst.

4. Der Verriegelungsmechanismus (100) nach wenigstens einem der Ansprüche 1 bis 3, **dadurch gekennzeichnet, dass** der Kontakt zwischen dem Kontaktende (22) und einer Außenumfangsfläche der Verriegelungswelle (3) ein Flächenkontakt ist.

5. Der Verriegelungsmechanismus (100) nach wenigstens einem der Ansprüche 1 bis 2, **dadurch gekennzeichnet, dass** eine Wellenmittellinie der Verriegelungswelle (3) und eine Wellenmittellinie der Drehwelle (4) so vorgesehen sind, dass sie in einer gleichen Bezugsebene liegen, und dass zwischen einer Bewegungsrichtung der Verriegelungswelle (3) in dem Aufnahmehohlraum (11) und der Bezugsebene ein Winkel besteht.

6. Der Verriegelungsmechanismus (100) nach wenigstens einem der Ansprüche 1 bis 2, **dadurch gekennzeichnet, dass** der Verriegelungsmechanismus (100) ein elastisches Element (5) umfasst, das auf die Verriegelungswelle (3) derart einwirkt, dass die Verriegelungswelle (3) im verriegelten Zustand durch das elastische Element (5) und die Verriegelungszunge (2) in dem Aufnahmehohlraum (11) in der Verriegelungsposition festgedrückt wird.

7. Der Verriegelungsmechanismus (100) nach wenigstens einem der Ansprüche 1 bis 6, **dadurch gekennzeichnet, dass** der Verriegelungsmechanismus (100) mindestens zwei Sätze der Verriegelungsbasen (1) und der Verriegelungszungen (2) umfasst,
der Verriegelungsmechanismus (100) eine Verbindungsstange (6) umfasst, mit der ein Drehende (23) jeder der Verriegelungszungen (2) verbunden ist, um eine gleichzeitige Verriegelung und Entriegelung einer Vielzahl der Verriegelungszungen (2) zu erreichen.

8. Der Verriegelungsmechanismus (100) nach wenigstens einem der Ansprüche 1 bis 7, **dadurch gekennzeichnet, dass** die Verriegelungsbasis (1) eine Öffnung (12) für die Verriegelungswelle (3) zum Eintreten in den Aufnahmehohlraum (11) aufweist und die Öffnung (12) einen Führungsabschnitt (121) aufweist.

9. Verriegelungsmechanismus (100) nach Anspruch 8, **dadurch gekennzeichnet, dass** die Öffnung (12) nach unten vorgesehen ist und der Führungsabschnitt (121) eine sich nach unten erweiternde Mündung bildet.

10. Der Verriegelungsmechanismus (100) nach wenigstens einem der Ansprüche 1 bis 9, **dadurch gekennzeichnet, dass** die Verriegelungszunge (2) einen fest verbundenen Verriegelungszungenkörper (24) und eine Verriegelungszungenverlängerung (25) umfasst, wobei die Verriegelungszungenverlängerung (25) außerhalb der Verriegelungsbasis (1) angeordnet ist und der Verriegelungszungenkörper (24) verhindern kann, dass die Verriegelungswelle (3) aus dem Aufnahmehohlraum (11) aus der Öffnung (12) des Aufnahmehohlraums (11) austritt, wenn sich die Verriegelungszunge (2) im verriegelten Zustand befindet;
wobei der Verriegelungsmechanismus (100) ferner ein an der Verriegelungsbasis (1) vorgesehenes und auf die Verriegelungszunge (2) wirkendes Rückstellelement (7) umfasst, und das Rückstellelement (7) elastisch verformbar ist, um die Verriegelungszunge (2) in einer Verriegelungsrichtung zu drehen, um aus dem entriegelten Zustand in den verriegelten Zustand zurückzukehren.

11. Batteriehalterung, **dadurch gekennzeichnet, dass** sie den Verriegelungsmechanismus (100) gemäß einem der Ansprüche 1 bis 10 umfasst.

12. Elektrofahrzeug, **dadurch gekennzeichnet, dass** es die Batteriehalterung gemäß Anspruch 11 umfasst.

13. Verfahren zum Verriegeln eines Akkupacks, **dadurch gekennzeichnet, dass** das Verfahren zum Verriegeln des Akkupacks den Verriegelungsmechanismus (100) nach wenigstens einem der Ansprüche 1 bis 10 verwendet und das Verfahren zum Verriegeln des Akkupacks die folgenden Schritte umfasst:
Anordnen der Verriegelungswelle (3) des Akkupacks in dem Aufnahmehohlraum (11); und
Drehen der Verriegelungszunge (2), so dass sich die Verriegelungswelle (3) im verriegelten Zustand befindet.

14. Verfahren zum Entriegeln eines Akkupacks, **dadurch gekennzeichnet, dass** das Verfahren zum Entriegeln des Akkupacks den Verriegelungsmechanismus (100) nach wenigstens einem der Ansprüche 1 bis 10 verwendet und das Verfahren zum Entriegeln des Akkupacks die folgenden Schritte umfasst:
Drehen der Verriegelungszunge (2), so dass sich die Verriegelungswelle (3) im entriegelten Zustand befindet; und
Entfernen der Verriegelungswelle (3) des Akkupacks aus dem Aufnahmehohlraum (11).

## Revendications

1. Mécanisme de verrouillage (100) comprenant une embase de verrouillage (1) et une languette de verrouillage (2) montée en rotation sur l'embase de verrouillage (1) autour d'un arbre rotatif (4), l'embase de verrouillage (1) étant pourvue d'une cavité de logement (11) pour verrouiller et fixer un arbre de verrouillage (3) d'un bloc-batterie, la languette de verrouillage (2) étant tournée de telle sorte que l'arbre de verrouillage (3) situé à l'intérieur de la cavité de logement (11) soit dans un état verrouillé et un état déverrouillé,
lorsque l'arbre de verrouillage (3) est à l'état verrouillé, un centre d'arbre de l'arbre rotatif (4) de la languette de verrouillage (2) est plus haut qu'un centre d'arbre de l'arbre de verrouillage (3) ;
l'arbre de verrouillage (3) génère une première force d'actionnement (F1) sur la languette de verrouillage (2), la première force d'actionnement (F1) forme un premier moment par rapport à l'arbre rotatif (4), et l'embase de verrouillage (1) génère une troisième force d'actionnement (F3) sur la languette de verrouillage (2), la troisième force d'actionnement (F3) forme un second moment par rapport à l'arbre rotatif (4), et le premier moment est opposé au second moment ;
la languette de verrouillage (2) comprend une extrémité de contact (22), l'extrémité de contact (22) est pourvue d'un angle tangentiel (221) s'étendant vers le centre d'arbre de l'arbre de verrouillage (3), et l'angle tangentiel (221) entre en contact avec une paroi extérieure de l'arbre de verrouillage (3) sous le centre d'arbre de l'arbre de verrouillage (3) lorsque l'arbre de verrouillage (3) est à l'état verrouillé ; **caractérisé en ce que** :
la languette de verrouillage (2) comprend une extrémité fixe (21) reliée en rotation à l'arbre rotatif (4), l'extrémité de contact (22) s'étendant vers la position de verrouillage de l'arbre de verrouillage (3) et étant adaptée pour buter contre l'arbre de verrouillage (3), et une extrémité de rotation (23) s'étendant vers l'extérieur de l'embase de verrouillage (1) et étant adaptée pour tourner autour de l'arbre rotatif (4) sous une force externe ;
l'extrémité de rotation (23) repose vers le bas contre le haut de l'embase de verrouillage (1) lorsque l'arbre de verrouillage (3) est à l'état verrouillé.

2. Mécanisme de verrouillage (100) selon la revendication 1, **caractérisé en ce qu'**une extrémité de la cavité de logement (11) est une position de verrouillage de l'arbre de verrouillage (3), et l'autre extrémité est une position de connexion de l'arbre rotatif (4) de la languette de verrouillage (2),
lorsque l'arbre de verrouillage (3) est à l'état verrouillé, l'arbre de verrouillage (3) exerce une première force d'actionnement (F1) sur la languette de verrouillage (2), et l'arbre rotatif (4) exerce une deuxième force d'actionnement (F2) sur la languette de verrouillage (2), et la première force d'actionnement (F1) est opposée à la deuxième force d'actionnement (F2).

3. Mécanisme de verrouillage (100) selon au moins l'une des revendications 1 à 2, **caractérisé en ce que** l'extrémité de contact (22) vient en butée contre l'arbre de verrouillage (3) lorsque l'arbre de verrouillage (3) est à l'état verrouillé, et une position sur l'arbre de verrouillage (3) qui vient en contact avec l'extrémité de contact (22) comporte une paroi extérieure de l'arbre de verrouillage (3) sous le centre d'arbre de l'arbre de verrouillage (3).

4. Mécanisme de verrouillage (100) selon au moins l'une des revendications 1 à 3, **caractérisé en ce que** le contact entre l'extrémité de contact (22) et une surface circonférentielle extérieure de l'arbre de verrouillage (3) est un contact de surface.

5. Mécanisme de verrouillage (100) selon au moins l'une des revendications 1 à 2, **caractérisé en ce qu'**une ligne centrale d'arbre de l'arbre de verrouillage (3) et une ligne centrale d'arbre de l'arbre rotatif (4) sont prévues pour être situées sur un même plan de référence, et **en ce qu'**il existe un angle entre une direction de déplacement de l'arbre de verrouillage (3) dans la cavité de logement (11) et le plan de référence.

6. Mécanisme de verrouillage (100) selon au moins l'une des revendications 1 à 2, **caractérisé en ce que** le mécanisme de verrouillage (100) comprend un organe élastique (5) qui agit sur l'arbre de verrouillage (3) de telle sorte que l'arbre de verrouillage (3) à l'état verrouillé est fixé par pression à la position verrouillée dans la cavité de logement (11) par l'organe élastique (5) et la languette de verrouillage (2).

7. Mécanisme de verrouillage (100) selon au moins l'une des revendications 1 à 6, **caractérisé en ce que** le mécanisme de verrouillage (100) comprend au moins deux ensembles des embases de verrouillage (1) et des languettes de verrouillage (2) :
le mécanisme de verrouillage (100) comprend une tige de liaison (6) à laquelle est reliée une extrémité de rotation (23) de chacune des languettes de verrouillage (2) pour réaliser un verrouillage et un déverrouillage simultanés d'une pluralité des languettes de verrouillage (2).

8. Mécanisme de verrouillage (100) selon au moins l'une des revendications 1 à 7, **caractérisé en ce que** l'embase de verrouillage (1) présente une ouverture (12) pour que l'arbre de verrouillage (3) pénètre dans la cavité de logement (11), et l'ouverture (12) présente une partie de guidage (121).

9. Mécanisme de verrouillage (100) selon la revendication 8, **caractérisé en ce que** l'ouverture (12) est prévue vers le bas, et la partie de guidage (121) constitue une bouche évasée qui s'évase vers le bas.

10. Mécanisme de verrouillage (100) selon au moins l'une des revendications 1 à 9, **caractérisé en ce que** la languette de verrouillage (2) comprend un corps de languette de verrouillage (24) relié de manière fixe et une extension de languette de verrouillage (25), l'extension de languette de verrouillage (25) étant située à l'extérieur de l'embase de verrouillage (1), et le corps de languette de verrouillage (24) pouvant empêcher l'arbre de verrouillage (3) de quitter la cavité de logement (11) depuis l'ouverture (12) de la cavité de logement (11) lorsque la languette de verrouillage (2) est à l'état verrouillé ;
le mécanisme de verrouillage (100) comprend en outre un organe de rappel (7) prévu sur l'embase de verrouillage (1) et agissant sur la languette de verrouillage (2), et l'organe de rappel (7) est élastiquement déformable pour faire tourner la languette de verrouillage (2) dans une direction de verrouillage pour revenir de l'état déverrouillé à l'état verrouillé.

11. Support de batterie, **caractérisé en ce qu'**il comprend le mécanisme de verrouillage (100) selon l'une quelconque des revendications 1 à 10.

12. Véhicule électrique, **caractérisé en ce qu'**il comprend le support de batterie selon la revendication 11.

13. Procédé de verrouillage d'un bloc-batterie, **caractérisé en ce que** le procédé de verrouillage du bloc-batterie utilise le mécanisme de verrouillage (100) selon au moins l'une des revendications 1 à 10, et le procédé de verrouillage du bloc-batterie comprend les étapes suivantes consistant à :
placer l'arbre de verrouillage (3) du bloc-batterie dans la cavité de logement (11) ; et
faire tourner la languette de verrouillage (2) de telle sorte que l'arbre de verrouillage (3) soit à l'état verrouillé.

14. Procédé de déverrouillage d'un bloc-batterie, **caractérisé en ce que** le procédé de déverrouillage du bloc-batterie utilise le mécanisme de verrouillage (100) selon au moins l'une des revendications 1 à 10, et le procédé de déverrouillage du bloc-batterie comprend les étapes suivantes consistant à :
faire tourner la languette de verrouillage (2) de telle sorte que l'arbre de verrouillage (3) soit à l'état déverrouillé ; et
retirer l'arbre de verrouillage (3) du bloc-batterie de la cavité de logement (11).
